# EUROPÄISCHE PATENTSCHRIFT

(11) **EP 2 009 462 B1**
(45) Veröffentlichungstag und Bekanntmachung des Hinweises auf die Patenterteilung: **22.12.2010**
(21) Anmeldenummer: 08103897.8
(22) Anmeldetag: 09.05.2008
(51) Int. Cl.: G01S 7/40, G01S 13/93

(54) **Verfahren und Vorrichtung zur Zustandserkennung eines an einem Kraftfahrzeug angeordneten Abstandssensors**
Method and device for recognising the state of a distance sensor attached to a motor vehicle
Procédé et dispositif de reconnaissance de l'état d'un capteur de distance agencé sur un véhicule automobile

(30) Priorität: 29.06.2007 DE 102007030230
(43) Veröffentlichungstag der Anmeldung: 31.12.2008
(73) Patentinhaber: ROBERT BOSCH GMBH, 70442 Stuttgart (DE)
(72) Erfinder: Petschnigg, Peter, 70469 Stuttgart (DE); Garcia Bordes, Maria-Eugenia, Jung-Gu, Seoul 100-130 (KR)

(56) Entgegenhaltungen:
- WO-A-01/22113
- DE-A1- 19 963 001

## Beschreibung

Die Erfindung betrifft ein Verfahren und eine Vorrichtung zur Zustandserkennung eines an einem Kraftfahrzeug angeordneten Abstandssensors mit einem Prozessor und einem Speicher zur Abspeicherung von Eigenschaften von ortsfesten Objekten, das sind relative Geschwindigkeit, Winkel und Entfernung, die als binäre Werte abspeicherbar, in Abtastzyklen zyklisch ermittelbar und ständig aktualisierbar sind, wobei erste Werte Winkel der ortsfesten Objekte bezüglich einer Fahrtrichtung des Kraftfahrzeugs repräsentieren und wobei eine Vorhersage getroffen und versucht wird, dieser Vorhersage neu gemessene Werte zuzuordnen und wenn der Vorhersage in mehreren aufeinanderfolgenden Zyklen keine Werte zugeordnet werden können, so ist das ortsfeste Objekt verloren gegangen und der Verlust des ortsfesten Objektes wird festgestellt, und einen Geschwindigkeitsregler, mittels dessen die Geschwindigkeit des Kraftfahrzeugs regelbar ist.

Abstandssensoren mit Geschwindigkeitsregler werden im Rahmen einer automatischen Geschwindigkeitsregelung eines Kraftfahrzeugs zur Erkennung vorausfahrender Kraftfahrzeuge eingesetzt. Die automatische Fahrgeschwindigkeitsregelung übernimmt die Geschwindigkeitsregelung des Kraftfahrzeugs derart, dass eine Soll-Geschwindigkeit eingeregelt wird, so lange die Umgebungsbedingungen dies zulassen. Die automatische Fahrgeschwindigkeitsregelung wird auch als adaptive Fahrgeschwindigkeitsregelung bezeichnet, die englische Übersetzung der adaptiven Fahrgeschwindigkeitsregelung lautet adaptive cruise control, abgekürzt ACC. Das ACC ist ein auf Radar oder Lidar basierendes Fahrerassistenzsystem, das automatisch einen geeigneten Abstand zum in einer eigenen Spur vorausfahrenden Kraftfahrzeug einhält. Dieses ausgewählte vorausfahrende Kraftfahrzeug wird als Ziel- oder Regelobjekt oder auch als Zielfahrzeug bezeichnet.

Der Abstandssensor ist unfähig, bei Blindheit vorausfahrende Kraftfahrzeuge sauber zu erkennen und zu verfolgen. Von daher ist eine vertrauenswürdige Erkennung dieser Blindheit und konsequenter Weise ein Abschalten des ACC unabdingbar. Um zu entscheiden, ob der Abstandssensor des ACC blind ist oder nicht, sind verschiedene Verfahren zur Erkennung der Blindheit bereits verwirklicht. Dies kann entweder auf Radarindikatoren oder auf eine Kombination von schlechten Wetterbedingungen und einer Verfolgungsleistung des vorausfahrenden Kraftfahrzeuges basieren.

Aus der DE 199 45 250 A1 sind solch ein Verfahren und solch eine Vorrichtung bekannt. Zumindest zwei Indikatoren werden gewichtet und derart verknüpft, dass eine Aussage über einen wahrscheinlichen Zustand des Sensors erfolgen kann. Die Indikatoren werden aus von dem Sensor empfangenen oder ausgesendeten Signalen gebildet. Ein erster möglicher Indikator ist die mittlere Winkelgüte aller von dem System detektierten Objekte. Die Winkelgüte kann beispielsweise aus dem Quotienten von realem Objektwinkel und der Differenz aus realem und gemessenem Objektwinkel bestimmt werden. Ein weiterer möglicher Indikator ist die Objektstabilität, die die Rate von Detektionsausfällen des für die Kraftfahrzeuglängsregelung ausgewählten Ziel- beziehungsweise Regelobjekts beschreibt. Ein weiterer Indikator ist die mittlere Leistung der von dem Sensor empfangenen Signale. Wird von einem Sensor viel Leistung empfangen, so kann diese beispielsweise von einzelnen starken oder auch von vielen schwachen Zielen herrühren. Ein weiterer möglicher Indikator ist die Summe aller von dem System während einer Messung detektierten Objekte.

Der Erfindung liegt die Aufgabe zugrunde, ein einfaches Verfahren und eine einfache Vorrichtung zur Erkennung eines verschmutzten oder blinden Abstandssensors anzugeben.

Diese Aufgabe wird mit den Merkmalen der Hauptansprüche gelöst. Dabei sind folgende Verfahrensschritte angewandt: Ein Verlust zumindest zweier ortsfester Objekte wird festgestellt, aus zuletzt ermittelten ersten Werten der zumindest zwei verloren gegangenen ortsfesten Objekte wird ein Mittelwert gebildet, der Mittelwert wird mit einem ersten vorgebbaren Schwellwert verglichen und ein eine Blindheit anzeigendes Zustandsbit wird gesetzt, wenn der Mittelwert kleiner des ersten vorgebbaren Schwellwertes liegt.

Wenn es schneit oder Schnee auf der Straße liegt, mit dem eine automatische Geschwindigkeitsregelung aufweisenden Kraftfahrzeug hinter einem Zielfahrzeug mit geringer Distanz hinterhergefahren wird, und die Linsenheizung eingeschaltet ist, trifft Schnee auf den Sensor, taut auf und gefriert wieder, bevor es den Sensor verlässt. Als Konsequenz wird eine Eisschicht in Form eines Eisringes gebildet. Mit voranschreitender Zeit wird der Eisring wachsen, bis die Linse vollständig von einer Eisschicht bedeckt ist.

Objekte werden in aufeinander folgenden Abtastzyklen vom Radar oder Lidar erfasst und deren Position abgespeichert. Die Position wird unter einem Winkel bezüglich der Fahrtrichtung des Kraftfahrzeugs gemessen und der Winkel und die Entfernung zu dem Kraftfahrzeug werden als binäre Werte abgespeichert. Die Objekte werden klassifiziert und nach bewegten und ortsfesten Objekten unterschieden. Die ortsfesten Objekte werden auch als stehende Objekte bezeichnet.

Das bedeutet, dass unter extrem schlechten Wetterbedingungen, also bei niedrigen Temperaturen und Schneefall, die optische Linse mit einer Eisschicht bedeckt sein kann, obwohl die Heizung der Linse aktiviert ist. Dieses Phänomen führt zu einer verminderten Leistung des ACC, weil das verfolgte Objekt, das heißt, das vorausfahrende Kraftfahrzeug, in der eigenen Spur nicht sauber detektiert werden kann. In einem ersten Abtastzyklus wird das vorausfahrende Kraftfahrzeug erkannt und in einem darauf folgendem nicht mehr. Das bedeutet, dass das vorausfahrende Kraftfahrzeug zeitweise verloren geht oder überhaupt nicht mehr erkannt wird. Abhängig davon und des weiteren abhängig von der vorgegebenen und abgespeicherten Geschwindigkeit wird der Geschwindigkeitsregler das Kraftfahrzeug beschleunigen, solange das vorausfahrende Kraftfahrzeug nicht detektiert wird, und abgebremst, wenn es wieder erkannt wird. Dies ist ein offensichtlich ungewünschtes und unkomfortables Verhalten, das verhindert wird.

Mit sauberer Linse können die ortsfesten Objekte detektiert werden, bis diese die Grenzen des Erfassungsbereiches überschreiten, wo diese außerhalb der Sichtweite des Sensors liegen und deshalb nicht länger erkannt werden. Der Erfassungsbereich des Sensors weist einen maximalen Öffnungswinkel von insgesamt 16 Grad auf, das sind 8 Grad nach rechts und 8 Grad nach links gemessen bezüglich einer Fahrtrichtung. Die Fahrtrichtung teilt den Erfassungsbereich in eine rechte und eine linke Erfassungsbereichshälfte. Wenn ein Eisring existiert, werden die stehenden Objekte sehr viel früher verloren als bei sauberer Linse.

Die stehenden Objekte werden nur bis zu einem von dem Eisring bestimmten Winkelwert verfolgt, das wird unterhalb des maximalen Erfassungsbereiches von 16 Grad sein und je mehr der Sensor überfroren ist, wird der Winkel abnehmen. Das Zustandsbit für die Blindheit wird also dann gesetzt, wenn die Linsenheizung eingeschaltet ist und der Winkel von stehenden Objekten unterhalb einer Grenze fällt, also unterhalb des ersten vorgebbaren Schwellwertes sinkt. Solch ein Schwellwert liegt vorzugsweise bei 6 Grad, insbesondere bei 4 Grad für eine Erfassungsbereichshälfte. Mit anderen Worten werden Winkel von stehenden Objekten verfolgt, wenn in vorteilhafter Weise die Linsenheizung aktiviert ist.

Ein ermitteltes Objekt wird unter gemessenen Werten abgespeichert. Das bedeutet, dass jedes ermittelte Objekt einen Listenplatz in dem Speicher erhält und Eigenschaften dieses Objektes abgespeichert werden. Diese Eigenschaften sind im wesentlichen relative Geschwindigkeit, Entfernung und Winkel zu dem den Abstandssensor aufweisenden Kraftfahrzeug. Diese Eigenschaften werden in Abtastzyklen zyklisch ermittelt und damit ständig aktualisiert. In einfacher Weise wird eine Vorhersage, auch als Prädiktion bezeichnet, getroffen und versucht, dieser Vorhersage neu gemessene Werte zuzuordnen. Können der Vorhersage keine Werte zugeordnet werden, so ist das Objekt verloren gegangen. Die zuletzt gemessenen Werte bleiben im Speicher erhalten. Können in mehreren aufeinander folgenden Zyklen der Vorhersage keine Werte zugeordnet werden, so ist das Objekt verloren gegangen und der Verlust des Objektes wird festgestellt. Sämtliche Werte des Objektes, ausgenommen des Wertes, der den zuletzt gemessenen Winkel repräsentiert, werden gelöscht. Der zuletzt gemessene Winkel, das heißt, der zuletzt ermittelte Winkel ist derjenige, unter dem das Objekt verloren gegangen ist. Werden Winkelwerte von zumindest zwei verloren gegangen Objekten gemittelt, so ist eine Filterung und somit eine Glättung erzielt. Streuungen, die bei Verlusten von Objekten auftreten können, bleiben unberücksichtigt.

In vorteilhafter Weise wird ein zweiter Wert, der eine Zeit für den Vergleich des Mittelwertes mit dem ersten vorgebbaren Schwellwert repräsentiert, zyklisch aktualisiert und mit einem zweiten vorgebbaren Schwellwert verglichen, und abhängig von den Vergleichen wird das eine Blindheit anzeigende Zustandsbit gesetzt. Das Zustandsbit wird abhängig zweier Vergleiche gesetzt. Der erste Vergleich betrifft den Vergleich des Mittelwertes mit dem ersten vorgebbaren Schwellwert. Der zweite Vergleich betrifft den Vergleich des zyklisch aktualisierten zweiten Wertes, der eine Zeit für den Vergleich des Mittelwertes mit dem ersten vorgebbaren Schwellwert repräsentiert, mit dem zweiten vorgebbaren Schwellwert. Der zweite Vergleich überprüft, ob seit dem Vergleich des Mittelwertes mit dem ersten vorgebbaren Schwellwert eine vorgebbare Zeitdauer verstrichen ist. Die Zeitdauer liegt vorzugsweise bei 60 Sekunden. Damit ist eine zeitliche Filterung und somit ebenfalls eine Glättung erzielt. Streuungen, die bei Verlusten von Objekten auftreten können, bleiben unberücksichtigt.

In vorteilhafter Weise werden Objektverluste lediglich auf einer Seite des Erfassungsbereiches ausgewertet. Das bedeutet, es wird nach Objektverlusten unterschieden, die bezüglich einer Fahrtrichtung in einer linken oder einer rechten Erfassungshälfte des Abstandssensors ortsfest angeordnet sind. Damit wird dem Umstand Rechnung getragen, dass der Sensor auf einer Sensorhälfte mit einer Eisschicht bedeckt ist. In vorteilhafter Weise sind lediglich ortsfeste Objekte berücksichtigt. Sind keine ortsfesten Objekte vorhanden, wird dieses Verfahren nicht ausgeführt, weil solch ein Winkel nicht messbar ist. Das Verfahren für eine Blindheitserkennung wird also lediglich dann durchgeführt, wenn sich die Leistung einer Erkennung von ortsfesten Objekten verringert. Erst wenn in vorteilhafter Weise der Mittelwert zumindest zweier ortsfester Objekte oberhalb einer Rücksetzgrenze, also oberhalb eines dritten Schwellwertes ermittelt wird, wird das Zustandsbit zurückgesetzt. Solch eine Rücksetzgrenze liegt vorzugsweise bei 6 Grad. Mit einer Verwendung von zwei voneinander verschiedenen Schwellwerten für das Setzen und das Zurücksetzen des eine Blindheit anzeigenden Zustandsbits ist eine Hysterese geschaffen.

In vorteilhafter Weise wird ein dritter Wert, der eine Zeit für den Vergleich des Mittelwertes mit dem dritten vorgebbaren Schwellwert repräsentiert, zyklisch aktualisiert, der zyklisch aktualisierte dritte Wert, der eine Zeit für den Vergleich des Mittelwertes mit dem dritten vorgebbaren Schwellwert repräsentiert, mit einem vierten vorgebbaren Schwellwert verglichen und abhängig von den Vergleichen wird das eine Blindheit anzeigendes Zustandsbit zurückgesetzt. Das Zustandsbit wird abhängig zweier Vergleiche zurückgesetzt. Der erste Vergleich betrifft den Vergleich des Mittelwertes mit dem dritten vorgebbaren Schwellwert. Der zweite Vergleich betrifft den Vergleich des zyklisch aktualisierten zweiten Wertes, der eine Zeit für den Vergleich des Mittelwertes mit dem dritten vorgebbaren Schwellwert repräsentiert, mit dem vierten vorgebbaren Schwellwert. Der zweite Vergleich überprüft, ob seit dem Vergleich des Mittelwertes mit dem dritten vorgebbaren Schwellwert eine vorgebbar Zeitdauer verstrichen ist. Solch eine Zeitdauer liegt vorzugsweise bei 120 Sekunden. Damit ist eine zeitliche Filterung und somit ebenfalls eine Glättung erzielt. Streuungen, die bei Verlusten von Objekten auftreten können, bleiben unberücksichtigt.

In vorteilhafter Weise wird abhängig von dem Zustandsbit der Geschwindigkeitsregler ausgeschaltet und ein entsprechender Warnhinweis ausgegeben. Damit ist sichergestellt, dass der Kraftfahrzeugführer die alleinige Verantwortung für das Kraftfahrzeug wieder zu übernehmen hat.

In vorteilhafter Weise wird abhängig von dem Zustandsbit eine Anzeigeeinrichtung geschaltet. Dies kann in einfacher Weise ein Signalgeber sein, der ein akustisches Warnsignal ertönen lässt. In einer alternativen Ausführungsform ist die Anzeigeeinrichtung als optische Anzeigeeinrichtung ausgeführt, auf der ein optisches Signal dargestellt wird.

In vorteilhafter Weise werden im Falle einer Sensorwinkelabweichung, auch als Dejustage bezeichnet, die Schwellwerte angepasst, so dass eine ungewünschte Blindheitserkennung mit einer sauberen Linse aber einem winkelabweichenden Sensor nicht auftritt. Die Schwellwerte sind in vorteilhafter Weise vorgebbar, so dass Eigenschaften des Kraftfahrzeugs, des Abstandssensors und des Kraftfahrzeugführers berücksichtigt werden können. Schwellwerte werden nachfolgend auch als Schwellen bezeichnet. Die englische Übersetzung für Zustandsbit lautet flag bit. Als ortsfeste Objekte, die auch als stehende Objekte bezeichnet werden, eignen sich Leitpfosten zur Detektion.

Zum besseren Verständnis der Erfindung ist nachfolgend ein Ausführungsbeispiel anhand der Zeichnung näher erläutert.

### Es zeigen

- Fig. 1: einen Abstandsensor mit einer Eisschicht in Schnittdarstellung,
- Fig. 2: den Abstandssensor mit der Eisschicht in Draufsicht,
- Fig. 3: ein Kraftfahrzeug mit dem Abstandssensor auf einer Straße mit an Fahrbahnrändern angeordneten ortsfesten Objekten in Draufsicht und
- Fig. 4: ein Flussdiagramm.

In den verschiedenen Figuren sind ähnliche oder dieselben Elemente durch gleiche Bezugszeichen bezeichnet.

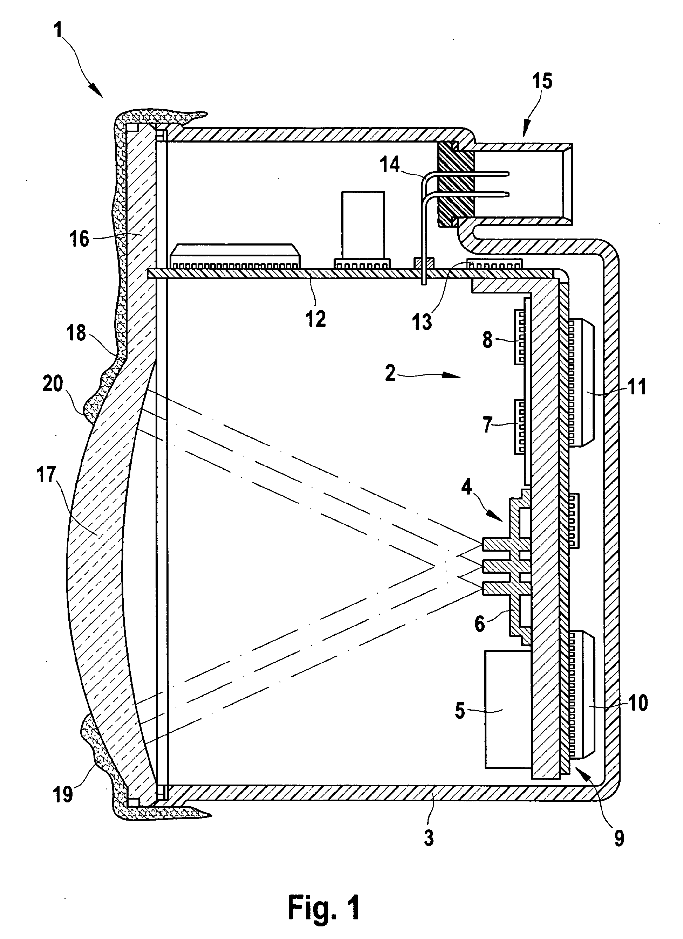

Figur 1 zeigt einen Abstandssensor 1 mit einer Vorrichtung 2 und einem Gehäuse 3. Die Vorrichtung 2 weist eine Radar-Sende-Empfangseinheit 4 mit einem Oszillatorblock 5, eine Strahlquelle 6 und weitere elektronische Bauteile 7 und 8, eine erste Leiterplatte 9 mit zumindest einem ersten Prozessor 10 und einem ersten Speicher 11 und eine zweite Leiterplatte 12 mit einem zweiten Prozessor 13 mit zumindest einem zweiten Speicher auf. In dem ersten Prozessor 10 werden Positionen und Geschwindigkeiten von erfassten Objekten berechnet und in dem Speicher 11 abgespeichert. Der zweite Prozessor 13 mit dem zweiten Speicher fungiert als Geschwindigkeitsregler. Von der zweiten Leiterplatte 12 führen elektrisch leitfähige Verbindungen 14 zu einer Steckverbindung 15. Das Gehäuse 3 weist eine Abdeckung 16 mit einer Linse 17 auf. Die Linse 17 weist einen Linsenrand 18 auf. Die Abdeckung 16 ist mit einer Eisschicht 19 bedeckt. Die Eisschicht 19 weist einen Eisschichtrand 20 auf.

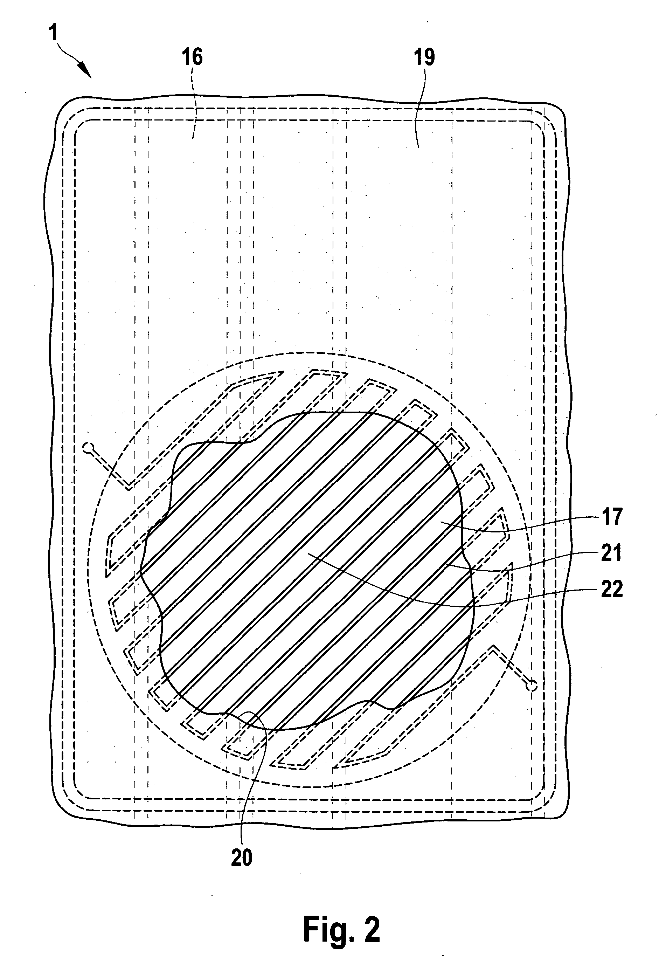

Figur 2 zeigt den mit der Eisschicht 19 bedeckten Abstandssensor 1. Die Linse 17 der Abdeckung 16 weist einen Heizdraht 21 als Linsenheizung auf. Die Abdeckung 16 ist von der Eisschicht 19 überzogen, die in einem Bereich 22 der Linse 17 eine etwa kreisförmige Ausnehmung aufweist. Die Ausnehmung ist von dem Eisschichtrand 20 begrenzt.

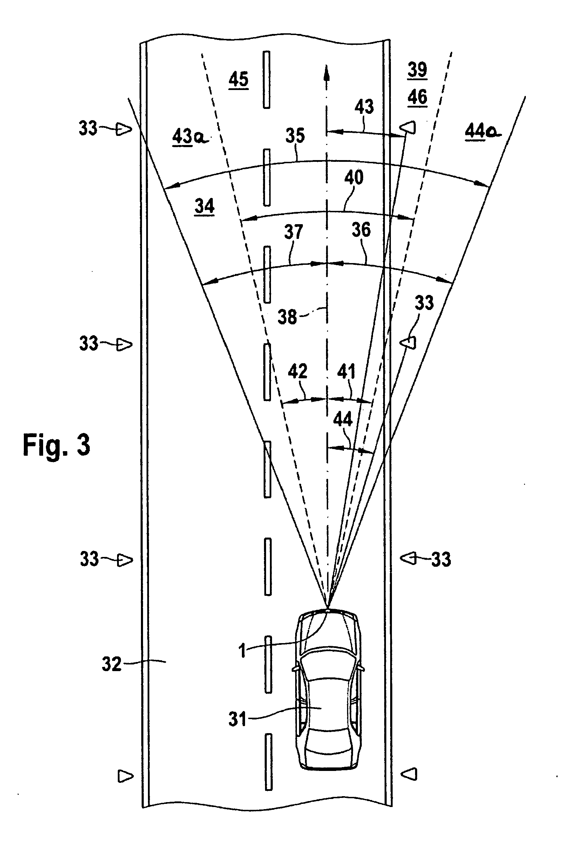

Figur 3 zeigt ein Kraftfahrzeug 31 mit dem Abstandssensor 1 auf einer Straße 32. Die Straße 32 ist von ortsfesten Leitpfosten 33 begrenzt. Der Abstandssensor 1 sendet Strahlen aus, die sich parallel einer Fahrbahnebene der Straße 32 ausbreiten und die Leitpfosten 33 bestrahlen. Die Leitpfosten 33 reflektieren die Strahlung zurück in den Abstandssensor 1. Ein Erfassungsbereich 34 des sauberen Sensors 1 weist einen maximalen Öffnungswinkel 35 von insgesamt 16 Grad auf, das sind ein Halbwinkel 36 von 8 Grad nach rechts und ein Halbwinkel 37 von 8 Grad nach links gemessen bezüglich einer Fahrtrichtung 38. Ein verringerter Erfassungsbereich 39 des mit einer Eisschicht 19 bedeckten Sensors 1 weist einen verringerten Öffnungswinkel 40 von insgesamt 12 Grad auf, das sind ein Halbwinkel 41 von 6 Grad nach rechts und ein Halbwinkel 42 von 6 Grad nach links gemessen bezüglich der Fahrtrichtung 38. Ist der Abstandssensor 1 von einer Eisschicht 19 bedeckt, breiten sich die Strahlen unter dem verringertem Erfassungsbereich 39 aus. Zwei der Leitpfosten 33 werden unter Winkeln 43 und 44 erfasst. Mit vereistem Abstandssensor wird nur der entferntere der beiden Leitpfosten 33 erfasst, nämlich derjenige, der sich in dem verringerten Erfassungsbereich 39 befindet. Die Fahrtrichtung 38 unterteilt den maximalen Erfassungsbereich 34 in eine linke und eine rechte maximale Erfassungsbereichshälfte 43a und 44a und den verringerten Erfassungsbereich 39 in eine linke und eine rechte verringerte Erfassungsbereichshälfte 45 und 46.

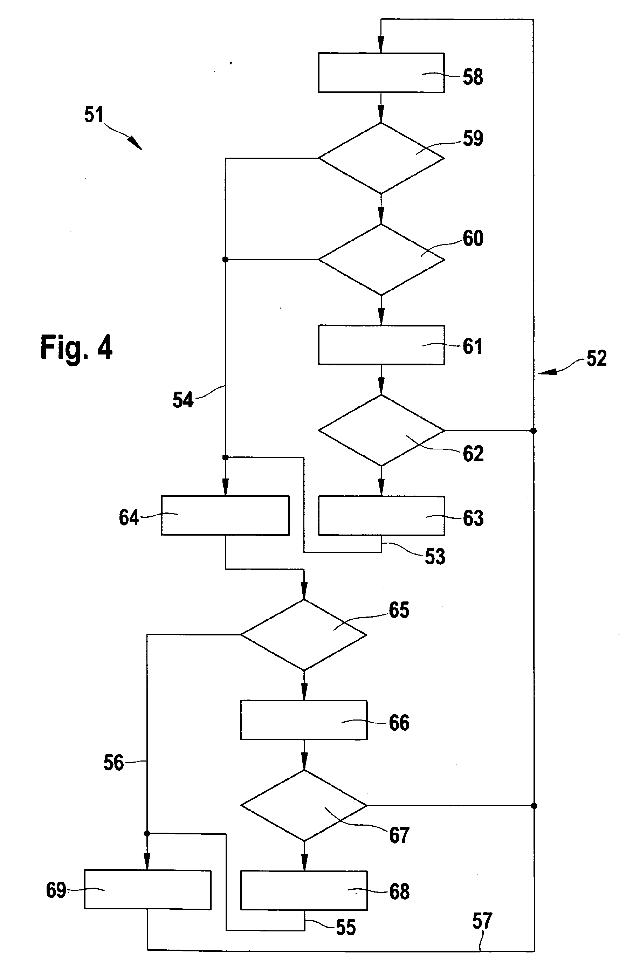

Fig. 4 zeigt ein Flussdiagramm 51 mit einer zyklischen Schleife 52. Die zyklische Schleife 52 weist zwei parallele Zweige 53 und 54 und seriell dazu zwei weitere parallele Zweige 55 und 56 sowie einen Rückführzweig 57 auf. In einem ersten Operationsschritt 58 vor den ersten parallelen Zweigen 53 und 54, wird ein Mittelwert, im folgenden auch als Durchschnittswert bezeichnet, für einen Winkel berechnet, unter dem ortsfeste Objekte verloren gehen. Der erste parallele Zweig 53 weist drei Verzweigungsschritte 59, 60 und 62 und zwei Operationsschritt 61 und 63 auf. In dem ersten Verzweigungsschritt 59 wird abgefragt, ob die Umgebungstemperatur unterhalb einer vorgebbaren Temperatur liegt und ob kein Zielobjekt verfügbar ist. Als vorgebbare Temperatur ist vorzugsweise der Gefrierpunkt gewählt. Sind beide Bedingungen erfüllt, wird in dem zweiten Verzweigungsschritt 60 überprüft, ob der Durchschnittswert für den Winkel, unter dem stehende Objekte verloren gehen, kleiner einer ersten vorgebbaren Schwelle liegt. Ist dies der Fall, so wird in dem zweiten Operationsschritt 61 ein zweiter Wert, im folgenden auch als Zeitwert bezeichnet, aktualisiert. Das bedeutet, der Zeitwert wird um einen Schleifenzeitwert erhöht. In dem dritten Verzweigungsschritt 62 wird überprüft, ob der aktualisierte Zeitwert größer einer zweiten vorgebbaren Schwelle liegt. Ist dies der Fall, so wird in dem dritten Operationsschritt 63 das Zustandsbit für die Blindheit gesetzt. Danach wird auf einen vierten Operationsschritt 64 geführt und in dem vierten Operationsschritt 64 wird der Zeitwert gleich Null gesetzt. Wird in dem ersten Verzweigungsschritt 59 festgestellt, dass die Umgebungstemperatur größer als eine vorgebbare Temperatur liegt oder dass ein Zielobjekt verfügbar ist, so wird über den zweiten parallelen Zweig 54 zu dem vierten Operationsschritt 60 geführt und in dem vierten Operationsschritt 64 der Zeitwert zu Null gesetzt. Wird in dem zweiten Verzweigungsschritt 60 festgestellt, dass der Durchschnittswert für den Winkel, unter dem stehende Objekte verloren gehen, größer einer vorgebbaren Schwelle liegt, so wird der Zeitwert zu Null gesetzt. Ist in dem dritten Verzweigungsschritt 62 der Zeitwert kleiner als eine vorgebbare Schwelle, so wird auf den Rückführzweig 57 geführt und die Schleife 52 neu gestartet.

Von dem vierten Operationsschritt 64 wird zu einem vierten Verzweigungsschritt 65 gesprungen. Der vierte Verzweigungsschritt 65 ist Teil des dritten parallelen Zweiges 55. Der dritte parallele Zweig 55 weist den vierten Verzweigungsschritt 65 und einen fünften Verzweigungsschritt 67 sowie zwei Operationsschritte 66 und 68 auf. In dem vierten Verzweigungsschritt 65 wird abgefragt, ob der Durchschnittswert für den Winkel, bei dem stehende Objekte verloren gehen, größer als ein dritter vorgebbarer Schwellwert liegt. Der dritte Schwellwert repräsentiert eine Rücksetzschwelle. Ist dies der Fall, so wird in dem fünften Operationsschritt 66 ein dritter Wert, im folgenden auch als Rücksetzzeitwert bezeichnet, aktualisiert, das heißt, dass der Rücksetzzeitwert um den Schleifenzeitwert erhöht wird. In dem fünften Verzweigungsschritt wird abgefragt, ob der Rücksetzzeitwert größer als eine vierte vorgebbare Schwelle, also größer einer Rücksetzzeitwertschwelle ist. Ist dies der Fall, so wird in dem sechsten Operationsschritt 68 das Zustandsbit für die Blindheit zurückgesetzt. Danach wird auf einen siebten Operationsschritt 69 geführt. Ist in dem vierten Verzweigungsschritt 65 der Durchschnittswert für den Winkel, unter dem stehende Objekte verloren gehen, kleiner als die vorgebbare Rücksetzschwelle, so wird in dem siebten Operationsschritt 69 der Rücksetzzeitwert zu Null gesetzt. Ist in dem fünften Verzweigungsschritt 67 der Rücksetzzeitwert kleiner als die vierte vorgebbare Schwelle, auch als Rücksetzzeitwertschwelle bezeichnet, so wird auf die Rückführschleife 57 geführt und die Schleife 52 startet neu mit dem Operationsschritt 58, in dem der Mittelwert für zumindest zwei verloren gegangene Objekte berechnet wird. Von dem siebten Operationsschritt 69 führt der Rückführzweig 57 zu dem ersten Operationsschritt 58.

## Patentansprüche

1. Verfahren zur Zustandserkennung eines an einem Kraftfahrzeug (31) angeordneten Abstandssensors (1) mit einem Prozessor (10) und einem Speicher (11) zur Abspeicherung von Eigenschaften von ortsfesten Objekten (33), das sind relative Geschwindigkeit, Winkel (43, 44) und Entfernung, die als binäre Werte abspeicherbar, in Abtastzyklen zyklisch ermittelbar und ständig aktualisierbar sind, wobei erste Werte Winkel (43, 44) der ortsfesten Objekte (33) bezüglich einer Fahrtrichtung (38) des Kraftfahrzeugs (31) repräsentieren und wobei eine Vorhersage getroffen und versucht wird, dieser Vorhersage neu gemessene Werte zuzuordnen und wenn der Vorhersage in mehreren aufeinanderfolgenden Zyklen keine Werte zugeordnet werden können, so ist das ortsfeste Objekt (33) verloren gegangen und der Verlust des ortsfesten Objektes (33) wird festgestellt, und einen Geschwindigkeitsregler (13), mittels dessen die Geschwindigkeit des Kraftfahrzeugs (31) regelbar ist, mit folgenden Verfahrensschritten:
- ein Verlust zumindest zweier ortsfester Objekte (33) wird festgestellt,
- aus zuletzt ermittelten ersten Werten der zumindest zwei verloren gegangenen ortsfesten Objekte (33) wird ein Mittelwert gebildet,
- der Mittelwert wird mit einem ersten vorgebbaren Schwellwert verglichen und
- ein eine Blindheit anzeigendes Zustandsbit wird gesetzt, wenn der Mittelwert kleiner des ersten vorgebbaren Schwellwertes liegt.

2. Verfahren zur Zustandserkennung eines an einem Kraftfahrzeug (31) angeordneten Abstandssensors (1) mit einem Prozessor (10) und einem Speicher (11) zur Abspeicherung von einem zweiten Wert, der eine Zeit für den Vergleich des Mittelwertes mit dem ersten vorgebbaren Schwellwert repräsentiert, nach Anspruch 1, mit folgenden Verfahrensschritten:
- der zweite Wert, der eine Zeit für den Vergleich des Mittelwertes mit dem ersten vorgebbaren Schwellwert repräsentiert, wird zyklisch aktualisiert,
- der zyklisch aktualisierte zweite Wert, der eine Zeit für den Vergleich des Mittelwertes mit dem ersten vorgebbaren Schwellwert repräsentiert, wird mit einem zweiten vorgebbaren Schwellwert verglichen und
- abhängig von den Vergleichen wird ein eine Blindheit anzeigendes Zustandsbit gesetzt.

3. Verfahren nach Anspruch 1 oder 2, **gekennzeichnet durch** folgenden Verfahrensschritt:
- zusätzlich abhängig von einer eingeschalteten Linsenheizung (21) wird das Zustandsbit gesetzt.

4. Verfahren nach Anspruch 1, 2 oder 3, **dadurch gekennzeichnet, dass** ortsfeste Objekte (33) berücksichtigt sind, die in einer Erfassungsbereichshälfte (43, 44, 45 und 46) verloren gegangen sind.

5. Verfahren nach einem oder mehreren der vorherigen Ansprüche 1-4, **gekennzeichnet durch** folgende Verfahrensschritte:
- der Mittelwert wird mit einem dritten vorgebbaren Schwellwert verglichen und
- abhängig von dem Vergleich wird das Zustandsbit zurückgesetzt.

6. Verfahren zur Zustandserkennung eines an einem Kraftfahrzeug (31) angeordneten Abstandssensors (1) mit einem Prozessor (10) und einem Speicher (11) zur Abspeicherung von einem dritten Wert, der eine Zeit für den Vergleich des Mittelwertes mit dem dritten vorgebbaren Schwellwert repräsentiert, nach Anspruch 5, mit folgenden Verfahrensschritten:
- der dritte Wert, der eine Zeit für den Vergleich des Mittelwertes mit dem dritten vorgebbaren Schwellwert repräsentiert, wird zyklisch aktualisiert,
- der zyklisch aktualisierte dritte Wert, der eine Zeit für den Vergleich des Mittelwertes mit dem dritten vorgebbaren Schwellwert repräsentiert, wird mit einem vierten vorgebbaren Schwellwert verglichen und
- abhängig von den Vergleichen wird das eine Blindheit anzeigende Zustandsbit zurückgesetzt.

7. Verfahren nach einem oder mehreren der vorhergehenden Ansprüche 1- 6, **gekennzeichnet durch** folgenden Verfahrensschritt:
- abhängig von dem Zustandsbit wird der Geschwindigkeitsregler (13) geschaltet.

8. Verfahren nach einem oder mehreren der vorhergehenden Ansprüche 1- 7, **gekennzeichnet durch** folgenden Verfahrensschritt:
- abhängig von dem Zustandsbit wird eine Anzeigeeinrichtung geschaltet.

9. Verfahren nach einem der vorherigen Ansprüche 1 - 8, **dadurch gekennzeichnet, dass**
- der erste und der dritte Schwellwert abhängig von einer Sensorwinkelabweichung vorgebbar sind.

10. Vorrichtung zur Zustandserkennung eines an einem Kraftfahrzeug (31) angeordneten Abstandssensors (1) mit einem Prozessor (10) und einem Speicher (11) zur Abspeicherung von Eigenschaften von ortsfesten Objekten (33), das sind relative Geschwindigkeit, Winkel (43, 44) und Entfernung, die als binäre Werte abspeicherbar, in Abtastzyklen zyklisch ermittelbar und ständig aktualisierbar sind, wobei erste Werte Winkel (43, 44) der ortsfesten Objekte (33) bezüglich einer Fahrtrichtung (38) des Kraftfahrzeugs (31) repräsentieren und wobei eine Vorhersage getroffen und versucht wird, dieser Vorhersage neu gemessene Werte zuzuordnen und wenn der Vorhersage in mehreren aufeinanderfolgenden Zyklen keine Werte zugeordnet werden können, so ist das ortsfeste Objekt (33) verloren gegangen und der Verlust des ortsfesten Objektes (33) wird festgestellt, und einen Geschwindigkeitsregler (13), mittels dessen die Geschwindigkeit des Kraftfahrzeugs (31) regelbar ist, **dadurch gekennzeichnet, dass** ein Verlust zumindest zweier ortsfester Objekte (33) festgestellt, aus zuletzt ermittelten ersten Werten der zumindest zwei verloren gegangenen ortsfesten Objekte (33) ein Mittelwert gebildet, der Mittelwert mit einem ersten vorgebbaren Schwellwert verglichen und ein eine Blindheit anzeigendes Zustandsbit gesetzt wird, wenn der Mittelwert kleiner des ersten vorgebbaren Schwellwertes liegt.

## Claims

1. Method for detecting the state of a distance sensor (1) arranged on a motor vehicle (31) and having a processor (10) and a memory (11) for storing properties of fixed objects (33), that is to say relative speed, angle (43, 44) and distance, which can be stored as binary values, can be determined cyclically in sampling cycles and can be updated continuously, wherein first values represent angles (43, 44) of the fixed objects (33) with respect to a direction of travel (38) of the motor vehicle (31), and wherein a prediction is made and an attempt is made to assign newly measured values to this prediction, and if no values can be assigned to the prediction in a plurality of successive cycles, the fixed object (33) has been lost and the loss of the fixed object (33) is detected, and a cruise controller (13) by means of which the speed of the motor vehicle (31) can be regulated, having the following method steps:
- a loss of at least two fixed objects (33) is detected,
- a mean value is formed from the first values, determined last, of the at least two lost fixed objects (33),
- the mean value is compared with a first predefinable threshold value, and
- a state bit which indicates blindness is set if the mean value is lower than the first predefinable threshold value.

2. Method for detecting the state of a distance sensor (1) arranged on a motor vehicle (31) and having a processor (10) and a memory (11) for storing a second value which represents a time for the comparison of the mean value with the first predefinable threshold value, according to Claim 1, having the following method steps:
- the second value which represents a time for the comparison of the mean value with the first predefinable threshold value is updated cyclically,
- the cyclically updated second value which represents a time for the comparison of the mean value with the first predefinable threshold value is compared with a second predefinable threshold value, and
- a state bit which indicates blindness is set at a function of the comparisons.

3. Method according to Claim 1 or 2, **characterized by** the following method step:
- the state bit is additionally set as a function of a switched-on lens heating system (21).

4. Method according to Claim 1, 2 or 3, **characterized in that** fixed objects (33) which have been lost in a detection range half (43, 44, 45 and 46) are taken into account.

5. Method according to one or more of the preceding Claims 1-4, **characterized by** the following method steps:
- the mean value is compared with a third predefinable threshold value, and
- the state bit is reset as a function of the comparison.

6. Method for detecting the state of a distance sensor (1) arranged on a motor vehicle (31) and having a processor (10) and a memory (11) for storing a third value which represents a time for the comparison of the mean value with the third predefinable threshold value, according to Claim 5, having the following method steps:
- the third value which represents a time for the comparison of the mean value with the third predefinable threshold value is updated cyclically,
- the cyclically updated third value which represents a time for the comparison of the mean value with the third predefinable threshold value is compared with a fourth predefinable threshold value, and
- the state bit which indicates blindness is reset as a function of the comparisons.

7. Method according to one or more of the preceding Claims 1-6, **characterized by** the following method step:
- the cruise controller (13) is switched as function of the state bit.

8. Method according to one or more of the preceding Claims 1-7, **characterized by** the following method step:
- a display device is switched as a function of the state bit.

9. Method according to one of the preceding Claims 1-8, **characterized in that**
- the first and the third threshold values can be predefined as a function of a sensor angle deviation.

10. Device for detecting the state of a distance sensor (1) arranged on a motor vehicle (31) and having a processor (10) and a memory (11) for storing properties of fixed objects (33), that is to say relative speed, angle (43, 44) and distance, which can be stored as binary values, can be determined cyclically in sampling cycles and can be updated continuously, wherein first values represent angles (43, 44) of the fixed objects (33) with respect to a direction of travel (38) of the motor vehicle (31), and wherein a prediction is made and an attempt is made to assign newly measured values to this prediction, and if no values can be assigned to the prediction in a plurality of successive cycles, the fixed object (33) has been lost and the loss of the fixed object (33) is detected, and a cruise controller (13) by means of which the speed of the motor vehicle (31) can be regulated, **characterized in that** a loss of at least two fixed objects (33) is detected, a mean value is formed from first values, determined last, of the at least two lost fixed objects (33), the mean value is compared with a first predefinable threshold value, and a state bit which indicates blindness is set if the mean value is lower than the first predefinable threshold value.

## Revendications

1. Procédé de détection de l'état d'un détecteur de distance (1) disposé sur un véhicule automobile (31), et doté d'un processeur (10) et d'une mémoire (11) qui conserve des propriétés d'objets fixes (33), c'est-à-dire la vitesse relative, l'angle (43, 44) et la distance, ces propriétés pouvant être conservées en mémoire sous la forme de valeurs binaires qui sont déterminées cycliquement dans des cycles de palpage et qui peuvent être actualisées en permanence,
des premières valeurs représentant les angles (43, 44) des objets fixes (33) par rapport à une direction de déplacement (38) du véhicule automobile (31), et
une prédiction et une tentative d'associer cette prédiction à des valeurs nouvellement mesurées étant faites, et l'objet fixe (33) ayant disparu et la disparition de l'objet fixe (33) étant constatée si aucune valeur ne peut être associée à la prédiction au cours de plusieurs cycles successifs, et
doté d'un régulateur de vitesse (13) au moyen duquel la vitesse du véhicule automobile (31) peut être régulée,
le procédé présentant les étapes suivantes :
- la disparition d'au moins deux objets fixes (33) est constatée,
- une valeur moyenne est formée à partir des premières valeurs déterminées en dernier lieu sur les au moins deux objets fixes (33) qui ont disparu,
- la valeur moyenne est comparée à une première valeur de seuil qui peut être prédéterminée et
- un bit d'état qui indique la cécité est activé si la valeur moyenne est inférieure à la première valeur de seuil qui peut être prédéterminée.

2. Procédé selon la revendication 1, pour la détection de l'état d'un détecteur de distance (1) disposé sur un véhicule automobile (31) et doté d'un processeur (10) et d'une mémoire (11) qui conserve une deuxième valeur qui représente le temps nécessaire pour la comparaison de la valeur moyenne à la première valeur de seuil qui peut être prédéterminée,
le procédé présentant les étapes suivantes :
- la deuxième valeur qui représente la durée nécessaire pour la comparaison de la valeur moyenne à la première valeur de seuil qui peut être prédéterminée est actualisée cycliquement,
- la deuxième valeur actualisée cycliquement, qui représente le temps nécessaire pour la comparaison de la valeur moyenne à la première valeur de seuil qui peut être prédéterminée, est comparée à une deuxième valeur de seuil qui peut être prédéterminée et
- un bit d'état qui indique la cécité est activé en fonction de la comparaison.

3. Procédé selon la revendication 1 ou 2, **caractérisé par** l'étape de procédé suivants :
- le bit d'état est de plus activé en fonction d'un chauffage (21) de lentille branché.

4. Procédé selon la revendication 1, 2 ou 3, **caractérisé en ce que** les objets fixes (33) pris en compte sont ceux qui ont disparu dans une moitié (43, 44, 45 et 46) de la portée de détection.

5. Procédé selon l'un ou plusieurs des revendications 1 à 4 qui précèdent, **caractérisé par** les étapes de procédé suivantes :
- la valeur moyenne est comparée à une troisième valeur de seuil qui peut être prédéterminée et
- le bit d'état est désactivé en fonction de la comparaison.

6. Procédé selon la revendication 5, pour la détection de l'état d'un détecteur de distance (1) disposé sur un véhicule automobile (31) et doté d'un processeur (10) et d'une mémoire (11) qui conserve une troisième valeur qui représente la durée nécessaire pour la comparaison de la valeur moyenne à la troisième valeur de seuil qui peut être prédéterminée,
le procédé comportant les étapes de procédé suivantes :
- la troisième valeur qui représente la durée nécessaire pour la comparaison de la valeur moyenne à la troisième valeur de seuil qui peut être prédéterminée est actualisée cycliquement,
- la troisième valeur actualisée cycliquement, qui représente la durée nécessaire pour la comparaison de la valeur moyenne avec la troisième valeur de seuil qui peut être prédéterminée, est comparée à une quatrième valeur de seuil qui peut être prédéterminée et
- un bit d'état qui indique la cécité est désactivé en fonction de la comparaison.

7. Procédé selon l'une ou plusieurs des revendications 1 à 6 qui précèdent, **caractérisé par** l'étape de procédé suivants :
- le régulateur de vitesse (13) est branché en fonction du bit d'état.

8. Procédé selon l'une ou plusieurs des revendications 1 à 7 qui précèdent, **caractérisé par** l'étape de procédé suivants :
- un dispositif d'affichage est branché en fonction du bit d'état.

9. Procédé selon l'une des revendications 1 à 8 qui précèdent, **caractérisé en ce que** la première et la troisième valeur de seuil peuvent être prédéterminées en fonction d'un écart angulaire du détecteur.

10. Dispositif de détection de l'état d'un détecteur de distance (1) disposé sur un véhicule automobile (31) et doté d'un processeur (10) et d'une mémoire (11) qui conserve des propriétés d'objets fixes (33), c'est-à-dire la vitesse relative, l'angle (43, 44) et la distance, qui peuvent être conservées en mémoire sous la forme de valeurs binaires qui sont déterminées cycliquement dans des cycles de palpage et qui peuvent être actualisées en permanence,
des premières valeurs représentant les angles (43, 44) des objets fixes (33) par rapport à une direction de déplacement (38) du véhicule automobile (31), et
une prédiction et une tentative d'associer cette prédiction à des valeurs nouvellement mesurées étant faites, et l'objet fixe (33) ayant disparu et la disparition de l'objet fixe (33) étant constatée si aucune valeur ne peut être associée à la prédiction au cours de plusieurs cycles successifs, et
doté d'un régulateur de vitesse (13) au moyen duquel la vitesse du véhicule automobile (31) peut être régulée,
**caractérisé en ce que**
une disparition d'au moins deux objets fixes (33) est constatée,
**en ce qu'**une valeur moyenne est formée à partir de premières valeurs déterminées en dernier lieu des au moins deux objets fixes (33) qui ont disparu,
**en ce que** la valeur moyenne est comparée à une première valeur de seuil qui peut être prédéterminée et
**en ce qu'**un bit d'état qui indique la cécité est activé lorsque la valeur moyenne est inférieure à la première valeur de seuil qui peut être prédéterminée.
